Europäisches Patentamt

European Patent Office

Office européen des brevets

(11) Publication number: **0 084 962**
**B1**

# EUROPEAN PATENT SPECIFICATION

(45) Date of publication of patent specification: **30.03.88**

(21) Application number: **83300304.9**

(22) Date of filing: **21.01.83**

(51) Int. Cl.⁴: **G 01 G 19/32,** G 01 G 19/34, G 01 G 13/02

(54) **Weighing apparatus.**

(30) Priority: **22.01.82 JP 8025/82**

(43) Date of publication of application:
**03.08.83 Bulletin 83/31**

(45) Publication of the grant of the patent:
**30.03.88 Bulletin 88/13**

(84) Designated Contracting States:
**DE FR GB IT**

(56) References cited:
**FR-A-2 399 012**
**GB-A-2 071 343**
**GB-A-2 074 329**
**US-A-3 945 448**
**US-A-4 137 976**
**US-A-4 308 928**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Ishida, Takehisa**
**39-637, Kobata Okarayama**
**Uji-shi Kyoto (JP)**

(74) Representative: **Walter, Douglas Ernest et al**
**HASELTINE LAKE & CO. 28, Southampton Buildings**
**London WC2A 1AT (GB)**

Courier Press, Leamington Spa, England.

## Description

The present invention relates to. a weighing apparatus of the combinatorial weighing type which is often known as a computer scale.

Combinatorial weighing apparatus, often called a "computer scale" and its operation will briefly be described hereinbelow.

The combinatorial weighing apparatus has a central distribution table of a conical configuration, a plurality of supply troughs disposed below a peripheral edge of the distribution table and arranged radially therearound, and a plurality of pool hoppers positioned respectively below radially outward ends of the supply troughs. The bottom of each of the pool hoppers has a cover which is selectively openable and closable. The combinatorial weighing apparatus also includes as many weighing hoppers as the pool hoppers, the weighing hoppers underlying the pool hoppers. Each of the weighing hoppers also has at its bottom an openable and closable cover and is associated with a weight detector for weighing articles charged into the weighing hopper. A collection chute is disposed downwardly of the weighing hoppers for collecting the articles discharged from the weighing hoppers and delivering them to a packaging unit.

In operation, articles to be weighed are transported by a supply unit such as a bucket conveyor to a position over the conical distribution table, and are dropped onto the latter around its apex. The distribution table is vertically vibrated and reciprocably vibrated in helical motions by an electromagnetic vibratory unit to distribute the supplied articles substantially uniformly over the table in a radially outward direction toward the peripheral edge of the table. The distributed articles then fall off the peripheral edge thereof into the supply troughs, which are reciprocably vibrated obliquely upwardly and downwardly by electromagnetic vibratory units disposed below the respective supply troughs for delivering the articles radially outwardly to their outer ends, from which the articles drop into the respective pool hoppers therebelow. The vibratory motions of the distribution table and the supply troughs cause similar numbers of articles to be supplied into the pool hoppers in a unit period of time. When a number of articles close to a predetermined number are stored in each of the pool hoppers upon elapse of a preset interval of time, the vibrations of the distribution table and the supply troughs are stopped, and the covers of selected pool hoppers are opened to allow the articles therein to be fed into corresponding weighing hoppers positioned therebelow, in which latter the articles are weighed. The emptied pool hoppers are then re-supplied with articles through the foregoing article supplying operation until all of the pool hoppers are loaded. again.

The weight values obtained by the weighing hoppers are determined by a computer in a combinatorial arithmetic operation to find a combination of weights which is equal or closest to a required preset weight. The covers of the weighing hoppers that contain the articles which give such a combination of weights are opened to discharge the articles from the weighing hoppers into the collection chute. The discharged articles are gathered at a lower central portion of the collection chute, and then packed in a bag or the like. Articles are again charged into the emptied weighing hoppers from the corresponding pool hoppers, which become empty and will be supplied with articles again from corresponding supply troughs. Simultaneously, the foregoing weighing operation is repeated.

If the articles were supplied from the supply troughs directly to the weighing hoppers, disturbances in the flow rate of the articles in the supply troughs would vary the intervals of time it takes for the articles to be supplied to the weighing hoppers, and the time required for effecting the combinatorial weighing operation would be changed, a disadvantage which would change the weighing capability per minute or other unit time. Consequently, the pool hoppers are required.to ensure a desired weighing capability.

Combinatorial weighing using a computer as described above is capable of delivering articles in a wide variety of kinds combined in a total weight equal, or as close as possible, to a preset weight to a subsequent packaging step. Such a combinatorial weighing apparatus forms the subject of GB—A—2074329 which may be referred to for additional details.

However, where the preset weight is quite small, such as 20 g for example, and thin, lightweight articles such as potato crisps or chips are supplied to the weight hoppers, say 10 hoppers in number, there is a tendency for the known apparatus to perform the combinatorial weighing inaccurately or in extreme cases to fail to effect the combinatorial weighing. More specifically, articles while being fed from the distribution table to the collection chute are supplied from the supply troughs to the respective pool hoppers by oblique vibratory movements of the supply troughs which cause the articles to be advanced progressively in the supply troughs and then to fall off their outlets into the pool hoppers, respectively. In order to select all of the weighing hoppers uniformly throughout repeated weighing operations, it is required that the number of articles to be fed be selected to give a weight. close to a preset weight value so as to carry out the combinatorial weighing smoothly. To this end, the supply troughs are controlled in their vibratory motion on a time-dependent basis for supplying an appropriate number of articles to each pool hopper.

When the weight of combined batches of articles is small and hence the articles fed to each pool hopper are to be lightweight, the vibratory supply by the supply troughs under the supply interval control is liable to allow the articles to drop *en masse* into the pool hoppers. This causes certain pool hoppers to be supplied with articles which give an excessive total weight. Where thin articles such, for example, as potato chips or crisps, are to be weighed, potato chips or crisps sticking together tend to be supplied without being separated, and some pool hoppers may be overweighted. As a result, the combinatorial weighing operation based on weight values given by the weighing hoppers may suffer from a reduced combinatorial probability that the combined weights will be equal or closest to a preset weight, or sometimes can not be performed at all.

According to the present invention, there is provided a combinatorial weighing apparatus comprising:

a plurality of troughs for supplying batches of articles, each of said supply troughs having an outer end;

a plurality of vibratory units associated with respective supply troughs for imparting vibratory motions to the latter to move the articles through said supply troughs;

a plurality of pool hoppers disposed below said outer ends of the supply troughs for receiving the articles from said supply troughs, respectively, said pool hoppers having respective weighing units for weighing the articles contained in said pool hoppers; and

a plurality of weighing hoppers positioned respectively below said pool hoppers for receiving and weighing the articles from said pool hoppers for a combinatorial weighing operation;

characterised in that said pool hopper weighing units are actuable to inactivate said vibratory units for stopping the supply of the articles into said pool hoppers when the weights of the articles received by said pool hoppers have substantially reached preset values.

Advantageously each pool hopper has a weighing unit which is automatic and these units are mounted on supports placed on a base, the pool hoppers being respectively mounted on the automatic weighing units. The automatic weighing units weigh articles which are supplied to the pool hoppers. When the supplied articles have a suitable weight, they are fed to the weighing hoppers. Weight values given by the respective weighing hoppers are computed in combinations by a computer, and the weight combination which is equal, or closest to, a preset weight is found to detect the weight of combined batches of articles. Since articles in the pool hoppers are weighed for an appropriate-weight setting, the weight of articles which give a small combined weight or which are sticky in nature can be detected accurately, and an error of excessive article supply can almost always be prevented.

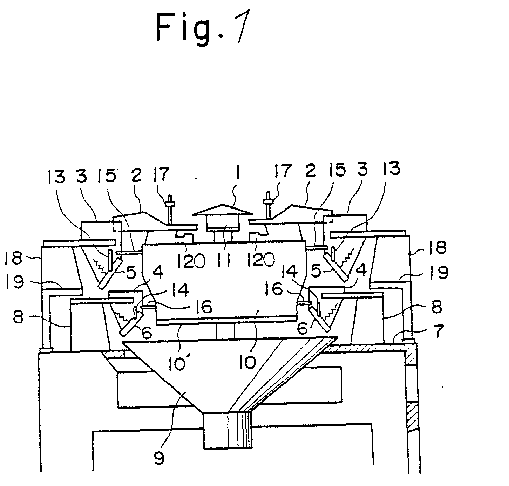

For a better understanding of the invention, and to show how the same may be carried into effect, reference will now be made, by way of example, to the accompanying drawing, in which the single Figure (Figure 1) is a schematic front view of a combinatorial weighing apparatus constructed in accordance with the present invention.

As illustrated in Figure 1, a base 7 has a relatively large diameter to provide thereon a plurality of support brackets 19 disposed radially outwardly of weight detectors 8 coupled with weighing hoppers 4 arranged circumferentially at equal angular intervals. The weight detectors 8 operate to weigh combinations of batches of articles received from pool hoppers 3 into the weighing hoppers 4. The batches of articles which have been selected and discharged in combination by the weighing hoppers 4 under the control of the weight detectors 8 are fed into a collection chute 9 supported on the base 7 below the weighing hoppers 4. A drive unit 10 is attached to a circular support table 10' and is positioned vertically between the collection chute 9 and supply troughs 2. The drive unit 10 serves to open and close covers 5, 6 of the pool hoppers 3 and the weighing hoppers 4. Levers 13, 14 are fixed respectively to the covers 5, 6 and can be angularly moved to open the covers 5, 6 in response to being moved by pusher rods 15, 16, respectively, which rods project radially outwardly from the periphery of the drive unit 10. Electromagnetic vibratory units 120 are mounted on the top of the drive unit 10 and respectively support the supply troughs 2 for vibrating the latter. A stack level sensor 17 controls the article supply operation of a supply unit (not shown) to keep articles stacked in a substantially constant number on a conical distribution table 1.

Automatic weighing units 18 are respectively mounted on support brackets 19 with the pool hoppers 3 respectively supported on the automatic weighing units 18. Articles supplied into the pool hoppers 3 are weighed at all times by the automatic weighing units 18. When articles having a suitable total weight are received by a pool hopper 3, the vibratory unit 120 of the corresponding supply trough 2 which registers with that pool hopper 3 is de-energized to stop its vibrations, thereby interrupting the supply of articles into the pool hopper 3 concerned. When it becomes necessary to supply the received articles, the pool hopper cover 5 is opened to feed them into the corresponding weighing hopper 4. The optimum weight of articles to be received by each of the pool hoppers 3 is selected to equal the weight of articles in each weighing hopper 4 used appropriately for combinatorial weighing with a slight weight margin ranging from ±1 to 2 g. The automatic weighing units 18 are adjusted to have a weight setting as described above before any articles are supplied from the supply troughs 2 to pool hoppers 3. The automatic weighing units 18 may be of the same construction as that of the automatic weighing detectors 8 for the weighing hoppers 4. Since the automatic weighing units 18 only weigh the articles in the pool hoppers 3, the automatic weighing units 18 may be of a simple design, such as a weight detector comprising a strain gauge having a predetermined weight setting, or a detector comprising a load cell. The automatic weighing units 18 thus enable the pool hoppers 3 to supply the respective weighing hoppers 4 with batches of received articles in weights appropriate for desired combinatorial weighing on the weighing hoppers 4, so that the weights as measured by the weighing hoppers 4 can fall within an allowable weight range.

The weight setting for articles received in the pool hoppers 3 may be selected individually for each pool hopper 3, or a single such weight setting may be established for all of the pool hoppers 3 since such a weight setting contains an appropriate tolerance factor.

Although in the foregoing embodiment articles are supplied to the pool hoppers from the supply troughs on vibratory movement thereof, the articles may be supplied from the pool hoppers to the corresponding weighing hoppers using simple supply devices such as ordinary conveyors, but not by way of vibratory conveyance, as the batches of articles have been weighed.

With the combinatorial weighing apparatus according to the present invention, as described above, the pool hoppers have a weighing function to weigh articles that have been supplied from the supply troughs into the pool hoppers, so that the articles contained in the pool hoppers will substantially have preset weights. Thereafter, the articles are fed to the weighing hoppers. Since articles are thus weighed by the pool hoppers prior to being supplied to the weighing hoppers for combinatorial weighing operation thereby, with the weight settings in the pool hoppers being easily selected to be in a range appropriate for the subsequent combinatorial weighing operation, the batches of articles can be discharged from corresponding weighing hoppers to provide a combined total weight which is equal, or as close as possible, to a preset weight value without error. With articles temporarily stored to an appropriate weight value in the pool hoppers, the weight of articles can be detected accurately when those articles have a small combined weight and/or are sticky, an arrangement that can prevent troubles such as excessive supply of articles which would tend to be caused by a conventional mode of control of the time during which the supply troughs are vibrated.

The weighing pool hoppers according to the present invention can simplify the supply units for supplying articles to the pool hoppers, and can be widely used in applications for handling a variety of kinds of articles, particularly lightweight articles which have been difficult to weigh accurately in batch combinations.

The present invention is equally applicable, with the foregoing advantages attained, to combinatorial weighing apparatus in which the weights of batches of articles are each divided by the weight of a single article to compute the number of articles in each batch, and a combinatorial computation is effected on the basis of the numbers of articles in the batches to obtain a combination of numbers or as close as possible to a preset number, so that batches of articles corresponding to the determined combination can be discharged. In such an application, each pool hopper is supplied with a number of articles which is predetermined with respect to the number of articles in each weighing hopper that is appropriate for combinatorial weighing.

Although a preferred embodiment has been shown and described in detail, it should be understood that many changes and modifications may be made therein without departing from the scope of the appended claims.

**Claims**

1. A combinatorial weighing apparatus comprising:

a plurality of troughs (2) for supplying batches of articles, each of said supply troughs (2) having an outer end;

a plurality of vibratory units (120) associated with respective supply troughs (2) for imparting vibratory motions to the latter to move the articles through said supply troughs (2);

a plurality of pool hoppers (3) disposed below said outer ends of the supply troughs (2) for receiving the articles from said supply troughs (2), respectively, said pool hoppers (3) having respective weighing units (18) for weighing the articles contained in said pool hoppers (3); and

a plurality of weighing hoppers (4) positioned respectively below said pool hoppers (3) for receiving and weighing the articles from said pool hoppers (3) for a combinatorial weighing operation;

characterised in that said pool hopper weighing units (18), are actuable to inactivate said vibratory units (120) for stopping the supply of the articles into said pool hoppers (3) when the weights of the articles received by said pool hoppers have substantially reached preset values.

2. A combinatorial weighing apparatus according to claim 1, characterised in that the weight of articles received in each pool hopper (3) is selected to be substantially equal, with a predetermined tolerance, to the weight of articles received in each weighing hopper (4) which is suitable for a combinatorial weighing operation by said weighing hoppers (4).

3. A combinatorial weighing apparatus according to claim 1 or 2, characterised in that each of said weighing units (18) comprises a strain gauge.

4. A combinatorial weighing apparatus according to claim 1 or 2, characterised in that each of said weighing units (18) comprises a load cell.

5. A combinatorial weighing apparatus according to claim 1, characterised in that it includes a vibratory unit (11) for vibrating a distribution table (1) of the apparatus.

**Patentansprüche**

1. Kombinatorische Wägvorrichtung, mit:

mehreren Trögen (2) zum Zuführen von Chargen von Artikeln, wobei jeder der Zuführtröge (2) ein äußeres Ende hat;

mehreren Vibratoreinheiten (120), die jeweiligen Zuführtrögen (2) zugeordnet sind, um diesen Vibrationsbewegungen zum Bewegen der Artikel durch die Zuführtröge (2) zu vermitteln;

mehreren Muldenbehältern (3), die unter den äußeren Enden der Zuführtröge (2) angeordnet sind, um die Artikel jeweils von den Zuführtrögen (2) aufzunehmen, wobei die Muldenbehälter (3) jeweilige Wägeinheiten (18) zum Wägen der in den Muldenbehältern (3) enthaltenen Artikel haben; und

mehreren Wägbehältern (4), die jeweils unter den Muldenbehältern (3) angeordnet sind, um die Artikel von den Muldenbehältern (3) für einen kombinatorischen Wägvorgang aufzunehmen und zu wägen;

dadurch gekennzeichnet, daß die Muldenbehälter-Wägeinheiten (18) zum Unwirksammachen der Vibratoreinheiten (120) betätigbar sind, um die Zufuhr der Artikel in die Muldenbehälter (3) zu stoppen, wenn die Gewichte der von den Muldenbehältern aufgenommenen Artikel voreingestellte Werte im wesentlichen erreicht haben.

2. Kombinatorische Wägvorrichtung nach Anspruch 1, dadurch gekennzeichnet, daß das Gewicht der in jedem Muldenbehälter (3) enthaltenen Artikel so gewählt wird, daß es mit einer vorbestimmten Toleranz im wesentlichen dem Gewicht von in jedem Wägbehälter (4) enthaltenen Artikeln gleicht, welches für einen kombinatorischen Wägvorgang durch die Wägbehälter (4) geeignet ist.

3. Kombinatorische Wägvorrichtung nach Anspruch 1 oder 2, dadurch gekennzeichnet, daß jede der Wägeinheiten (18) einen Spannungsmesser aufweist.

4. Kombinatorische Wägvorrichtung nach Anspruch 1 oder 2, dadurch gekennzeichnet, daß jede der Wägeinheiten (18) eine Kraftmeßdose aufweist.

5. Kombinatorische Wägvorrichtung nach Anspruch 1, dadurch gekennzeichnet, daß sie eine Vibratoreinheit (11) zur Vibration eines Verteilertischs (1) der Vorrichtung aufweist.

**Revendications**

1. Appareil de pesage combinatoire, comprenant:

— une pluralité d'auges (2) pour fournir des lots d'articles, chacune desdites auges d'alimentation (2) ayant une extrémité extérieure;

— une pluralité de vibrateurs (120) associés aux auges d'alimentation (2) respectives, pour communiquer des mouvements de vibration à ces dernières, afin de transporter les articles dans lesdites auges d'alimentation (2);

— une pluralité de trémies d'accumulation (3) disposées en-dessous desdites extrémités des auges d'alimentation (2), pour recevoir les articles en provenance desdites auges d'alimentation (2) respectivement, lesdites trémies d'accumulation (3) ayant des unités de pesage respectives (18) pour peser les articles contenus dans lesdites trémies d'accumulation (3); et

— une pluralité de trémies de pesage (4) positionnées respectivement en-dessous desdites trémies d'accumulation (3), pour recevoir et peser les articles en provenance desdites trémies d'accumulation (3), pour une opération de pesage combinatoire;

caractérisé par le fait que lesdites unités de pesage (18) des trémies d'accumulation peuvent être actionnées pour rendre inactifs lesdits vibrateurs (120) afin d'arrêter l'introduction des articles dans lesdites trémies d'accumulation (3) quand les poids des articles reçus par lesdites trémies d'accumulation ont essentiellement atteint des valeurs prédéterminées.

2. Appareil de pesage combinatoire selon la revendication 1, caractérisé par le fait que le poids des articles reçus dans chaque trémie d'accumulation (3) est sélectionné pour être essentiellement égal, avec une tolérance prédéterminée, au poids des articles reçus dans chaque trémie de pesage (4), qui est convenable pour une opération de pesage combinatoire par lesdites trémies de pesage (4).

3. Appareil de pesage combinatoire selon les revendications 1 ou 2, caractérisé par le fait que chacune des unités de pesage (18) comporte une jauge de contrainte.

4. Appareil de pesage combinatoire selon les revendications 1 ou 2, caractérisé par le fait que chacune des unités de pesage (18) comporte une cellule dynamométrique.

5. Appareil de pesage combinatoire selon la revendication 1, caractérisé par le fait qu'il comporte un vibrateur (11) pour faire vibrer une table de distribution (1) de l'appareil.

0 084 962

Fig. 1